# EUROPEAN PATENT APPLICATION

(11) **EP 4 775 497 A1**
(43) Date of publication of application: **15.07.2026**
(21) Application number: 24863126.9
(22) Date of filing: 30.08.2024
(51) Int. Cl.: B64U 30/30, B64U 10/13, B64U 50/19, B64U 10/20, B64C 39/02

(54) **PROPULSION FORCE GENERATOR AND DRONE USING SAME**

(30) Priority: 04.09.2023 KR 20230116748; 29.08.2024 KR 20240117228
(71) Applicant: Kang, Daehyun, Hanam-si, Gyeonggi-do 12966 (KR)
(72) Inventor: Kang, Daehyun, Hanam-si, Gyeonggi-do 12966 (KR)
(74) Representative: Cabinet Chaillot
(86) International application number: PCT/KR2024/012995
(87) International publication number: WO 2025/053545

(57) **Abstract**

The present specification suggests an invention regarding a propulsion force generator and a drone using same. The propulsion force generator according to an embodiment of the present invention comprises: a motor (110); a driving shaft (120) rotatably driven by the motor (110); and a plurality of shells which are coupled to the driving shaft (120) using a central axis X1 of the driving shaft (120) as a common rotary axis, and each of the plurality of shells has a plurality of inlet ports through which a fluid flows in according to the rotation of the driving shaft, and the fluid is branched by the plurality of shells and discharged.

## Description

### [Technical Field]

The present invention relates to a propulsion generator and a drone using the same.

### [Background Art]

Typical drones are manufactured as unmanned aerial vehicles in which pilots do not ride and which are controlled remotely and have structures in which externally exposed propellers (wings) for generating propulsion forces are mounted.

Since a typical drone includes an externally exposed wing as described above, when the typical drone abnormally falls or crashes, there is a problem that a safety-related accident occurs due to contact of the propeller, and there is a problem of increasing maintenance costs due to damage to the propeller. In addition, there is a problem that a considerable level of noise is generated by the externally exposed propeller.

Due to such problems, an applicable use of a typical drone is limited, and in particular, the typical drone has no choice but to have a structure which is very unsuitable for being applied as a manned drone in which a person rides.

### [Detailed Description of Invention]

### [Technical Problem]

The present invention is directed to providing a propulsion force generator capable of generating a propulsion force without a propeller, and a drone using the same.

### [Technical Solution]

The present invention provides a propulsion force generator including a motor (110), a driving shaft (120) driven and rotated by the motor (110), and a plurality of shells coupled to the driving shaft (120) of which a central axis (X1) is a common rotary axis, wherein a plurality of inlet ports through which a fluid is introduced according to rotation of the driving shaft are formed in each of the plurality of shells, and the introduced fluid is branched off by and discharged along the plurality of shells.

In one embodiment, in the propulsion force generator, the fluid may be branched off and discharged in one common direction.

In one embodiment, in the propulsion force generator, the common direction may be a direction parallel to the central axis (X1).

In one embodiment, in the propulsion force generator, the plurality of shells may be formed in similar shapes to each other, and sizes of the plurality of shells gradually may decrease toward inner side locations.

In one embodiment, in the propulsion force generator, sizes of the inlet ports formed in the plurality of shells gradually may decrease toward inner side locations.

In addition, the present invention provides a propulsion force generator including a motor (110), a driving shaft (120) driven and rotated by the motor (110), and a plurality of shells coupled to the driving shaft (120) of which a central axis (X1) is a common rotary axis, wherein a plurality of inlet ports through which a fluid is introduced according to rotation of the driving shaft are formed in the remaining shells of the plurality of shells other than an innermost shell, and the introduced fluid is branched off by and discharged along the plurality of shells.

In one embodiment, in the propulsion force generator, the fluid may be branched off and discharged in one common direction.

In one embodiment, in the propulsion force generator, the common direction may be a direction parallel to the central axis (X1).

In one embodiment, in the propulsion force generator, the plurality of shells may be formed in similar shapes to each other, and sizes of the plurality of shells gradually may decrease toward inner side locations.

In one embodiment, in the propulsion force generator, sizes of the inlet ports formed in the plurality of shells gradually may decrease toward inner side locations.

In addition, the present invention provides a drone including a drone body (11) and a plurality of propulsion force generators connected to the drone body (11), wherein each of the propulsion force generators includes a motor (110), a driving shaft (120) driven and rotated by the motor (110), and a plurality of shells coupled to the driving shaft (120) of which a central axis (X1) is a common rotary, a plurality of inlet ports through which a fluid is introduced according to rotation of the driving shaft are formed in each of the plurality of shells, and the introduced fluid is branched off by and discharged along the plurality of shells.

In addition, the present invention provides a drone including a drone body (11) and a plurality of propulsion force generators connected to the drone body (11), wherein each of the propulsion force generators includes a motor (110), a driving shaft (120) driven and rotated by the motor (110), and a plurality of shells coupled to the driving shaft (120) of which a central axis (X1) is a common rotary axis, a plurality of inlet ports through which a fluid is introduced according to rotation of the driving shaft are formed in the remaining shells of the plurality of shells other than an innermost shell, and the introduced fluid is branched off by and discharged along the plurality of shells.

### [Advantageous Effects]

Since a propulsion force generator according to the present invention includes a plurality of shells which coaxially rotate and a flow path structure through which a fluid introduced through the plurality of shells is branched off and discharged in the same direction, a propulsion force can be generated without using a conventional propulsion force generator such as a propeller.

Since a drone according to the present invention is manufactured using such a propulsion force generator as a lift generator, noise can be reduced and safety can be improved when compared to a typical drone using a propeller.

A propulsion force generator according to the present invention is suitable for being manufactured in an independent type, that is, as a modularized part. Accordingly, when the propulsion force generator is used as a part in a product such as a drone, a method of assembling and connecting the separately premanufactured propulsion force generator can be easily applied.

### [Description of Drawings]

FIGS. 1 to 4 are views showing a propulsion force generator according to a first embodiment of the present invention.
FIG. 5 is a view showing an operation and an action of the propulsion force generator according to the first embodiment of the present invention.
FIGS. 6 and 7 are views showing a propulsion force generator of a second embodiment of the present invention.
FIG. 8 is a view for describing a backflow phenomenon which may occur when an inlet port is provided in an innermost shell.
FIGS. 9 and 10 are views showing a propulsion force generator according to a third embodiment of the present invention.
FIG. 11 is a view showing a propulsion force generator according to a fourth embodiment of the present invention.
FIG. 12 is a view showing a propulsion force generator according to a fifth embodiment of the present invention.
FIG. 13 is a view showing an alternative embodiment of the fifth embodiment.
FIGS. 14 and 15 are views showing a drone according to an embodiment of the present invention.

### [Modes of the Invention]

Hereinafter, embodiments of the present invention will be described in more detail with reference to the accompanying drawings.

### 1. First embodiment of propulsion force generator

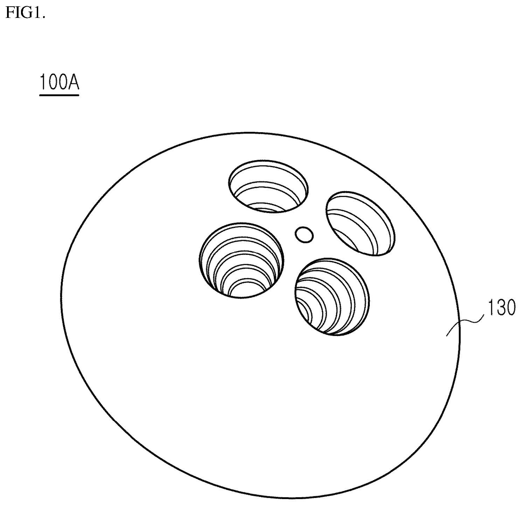

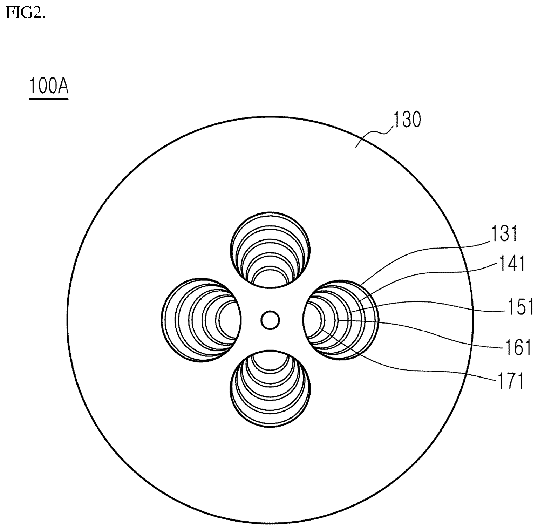

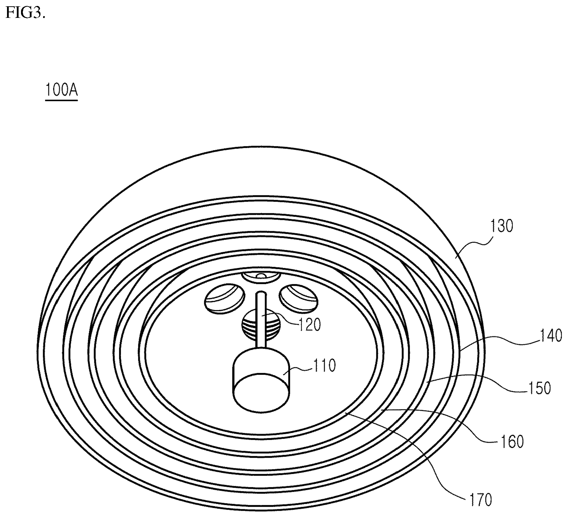

FIGS. 1 to 4 are views showing a propulsion force generator according to a first embodiment of the present invention.

Referring to the drawings, the propulsion force generator 100A according to the first embodiment of the present invention includes a motor 110, a driving shaft 120, and a plurality of shells 130, 140, 150, 160, and 170.

The plurality of shells 130, 140, 150, 160, and 170 are coupled to the driving shaft 120 of which a central axis X1 is a common rotary axis. Accordingly, when the driving shaft 120 is driven and rotated as the motor 110 is driven, the plurality of shells 130, 140, 150, 160, and 170 coupled thereto are rotated together.

A plurality of inlet ports 131, 141, 151, 161, and 171 are formed in the plurality of shells 130, 140, 150, 160, and 170, respectively.

As the driving shaft 120 is rotated as the motor is driven, an external fluid is introduced into the plurality of shells 130, 140, 150, 160, and 170 through the plurality of inlet ports 131, 141, 151, 161, and 171.

It is illustrated in the drawings that four inlet ports are provided in each of the plurality of shells 130, 140, 150, 160, and 170. However, the present invention is not limited thereto, and the number of the inlet ports provided in each of the plurality of shells 130, 140, 150, 160, and 170 may be variously changed to 2, 3, 5, or the like. In addition, In the drawings, it is illustrated that ach of the inlet ports has a circular shape. However, the present invention is not limited thereto, and the shape of the inlet port may be variously changed to an elliptical shape, rectangular shape, or the like.

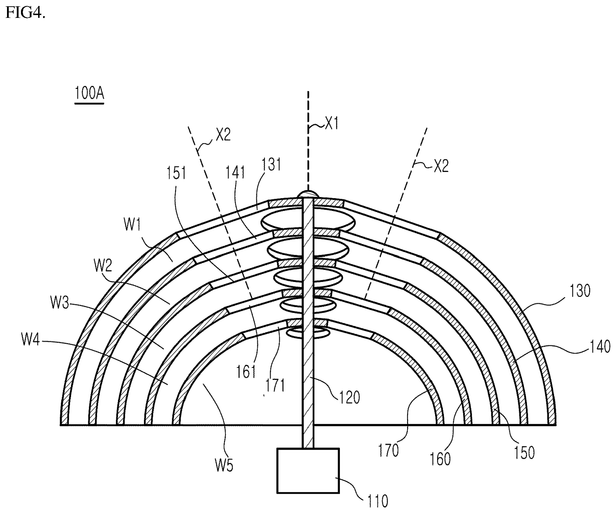

Referring to FIG. 4, the inlet ports 131, 141, 151, 161, and 171 are formed in upper regions of the shells 130, 140, 150, 160, and 170, and accordingly, the inlet ports 131, 141, 151, 161, and 171 are disposed close to the driving shaft 120. The inlet ports 131, 141, 151, 161, and 171 are disposed to share a common central axis X2. In this case, the central axis X2 is inclined with respect to the central axis X1 of the driving shaft 120.

The plurality of shells 130, 140, 150, 160, and 170 are provided to have similar shapes. In the drawings, the plurality of shells 130, 140, 150, 160, and 170 are provided in semi-ellipsoidal shapes. However, the shapes of the plurality of shells 130, 140, 150, 160, and 170 may be changed to hemispherical shapes, conic shapes, or the like.

Sizes of the plurality of shells 130, 140, 150, 160, and 170 gradually decrease from an outer side to an inner side. Accordingly, the outermost shell 130 is the greatest, and the innermost shell 170 is the smallest. Similarly, sizes of the plurality of inlet ports 131, 141, 151, 161, and 171 gradually decrease from the outer side to an inner side.

Referring to FIG. 4, the propulsion force generator 100A of the present embodiment has the plurality of shells 130, 140, 150, 160, and 170, and accordingly, has a plurality of branch paths W1, W2, W3, W4, and W5. Accordingly, the fluid introduced into the propulsion force generator 100A is branched off by and discharged through the plurality of branch paths W1, W2, W3, W4, and W5.

As shown in FIG. 4, downstream ends (lower ends in the drawing) of the plurality of branch paths W1, W2, W3, W4, and W5 are disposed in one common direction. As illustrated in the drawing, it may be preferable that the common direction be a direction parallel to the rotary axis X1 of the driving shaft 120.

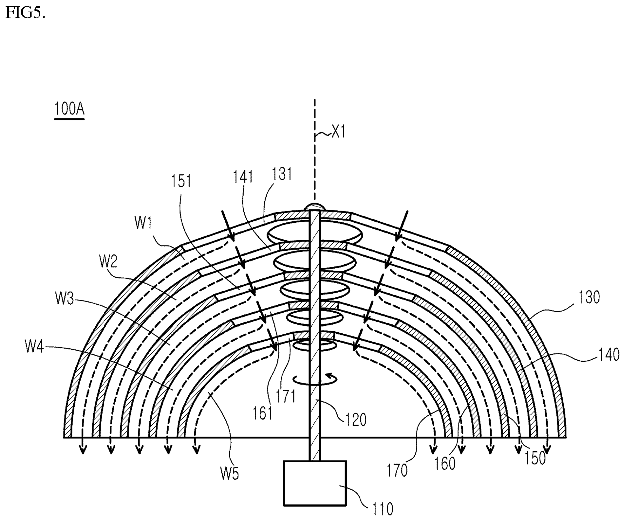

FIG. 5 is a view showing an operation and an action of the propulsion force generator according to the first embodiment of the present invention.

Referring to the drawing, when the motor 110 is driven, the driving shaft 120 rotates, and accordingly, the plurality of shells 130, 140, 150, 160, and 170 coaxially rotate around the central axis X1.

In this case, a fluid flows along arrow marks due to a function of a centrifugal force. Solid arrow marks indicate inflow of the fluid, and dotted arrow marks indicate outflow of the fluid.

According to such flow of the fluid, the fluid introduced into the propulsion force generator 100 is branched off and supplied to the plurality of branch paths W1, W2, W3, W4, and W5 through the plurality of inlet ports 131, 141, 151, 161, and 171 and discharged through the plurality of branch paths W1, W2, W3, W4, and W5.

A process of the branching off and supplying will be specifically described. A portion of an external fluid introduced through an outermost first inlet port 131 is branched off to a first branch path W1, and the remaining portion thereof is introduced through a second inlet port 141. In addition, a portion of the fluid introduced through the second inlet port 141 is branched off to a second branch path W2, and the remaining portion thereof is introduced through a third inlet port 151. In addition, a portion of the fluid introduced through the third inlet port 151 is branched off to a third branch path W3, and the remaining portion thereof is introduced into a fourth inlet port 161. In addition, a portion of the fluid introduced through the fourth inlet port 161 is branched off to a fourth branch path W4, and the remaining portion thereof is branched off to a fifth branch path W5 through a fifth inlet port 171.

As illustrated in FIG. 5, the fluid is branched off and discharged along the shells 130, 140, 150, 160, and 170 of the present invention in one common direction parallel to the central axis X1.

In addition, according to such a fluid flow, a relatively greater fluid pressure is generated at a lower portion of the propulsion force generator 100 than at an upper portion thereof, and thus, a propulsion force is generated in a direction (upward direction in the drawing) opposite to a fluid discharge direction (downward direction in the drawing) due to a pressure difference therebetween.

### 2. Second embodiment of propulsion force generator

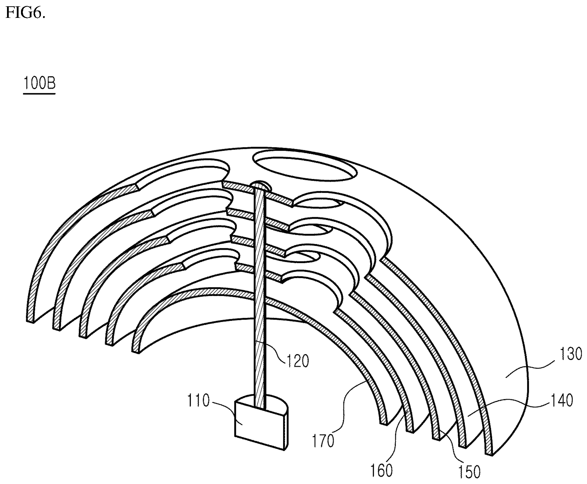

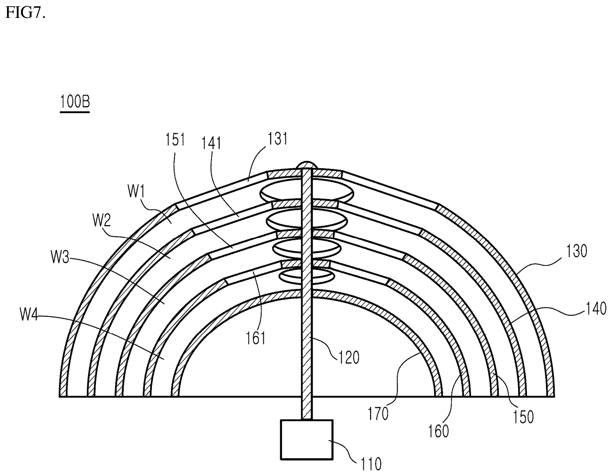

FIGS. 6 and 7 are views showing a propulsion force generator of a second embodiment of the present invention.

Referring to the drawings, although a propulsion force generator 100B according to the second embodiment of the present invention has almost the same structure as the above-described propulsion force generator 100A of the first embodiment, inlet ports 131, 141, 151, and 161 are formed in only shells 130, 140, 150, and 160 except for an innermost shell 170 of a plurality of shells 130, 140, 150, 160, and 170.

The reason why an inlet port is not formed in the innermost shell 170 is for preventing a phenomenon in which an external fluid flows backward and is introduced through the innermost shell 170.

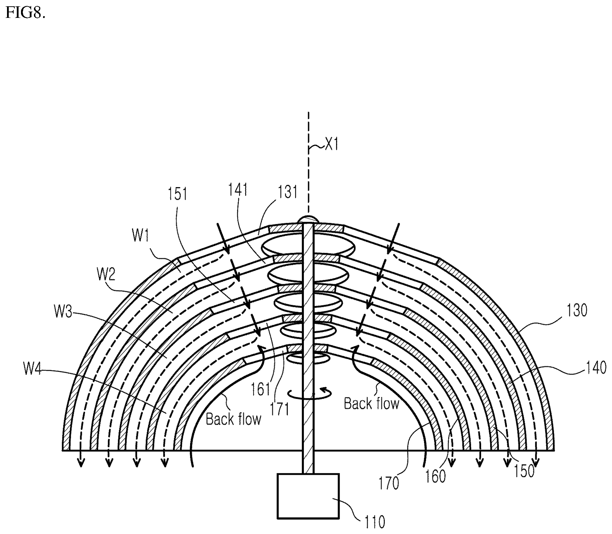

The fluid backflow phenomenon will be described with reference to FIG. 8. Since there are no other shells inside the innermost shell 170 as illustrated, an inner space of the innermost shell 170 has a widely open structure. Accordingly, while the propulsion force generator 100B operates, the phenomenon in which the external fluid flows backward through the inner space of the innermost shell 170 may occur. When the backflow phenomenon occurs, a propulsion force may be smoothly generated.

Since the inlet port is not formed in the innermost shell 170 like in the propulsion force generator 100B of the second embodiment, occurrence of the backflow phenomenon can be prevented.

### 3. Third embodiment of propulsion force generator

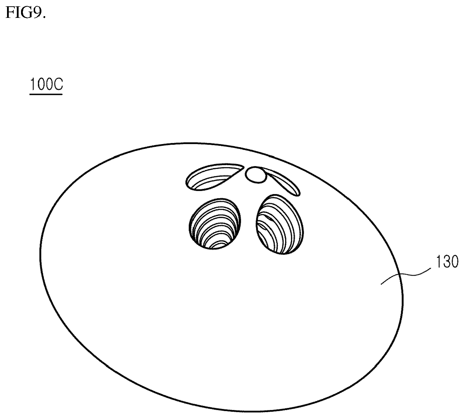

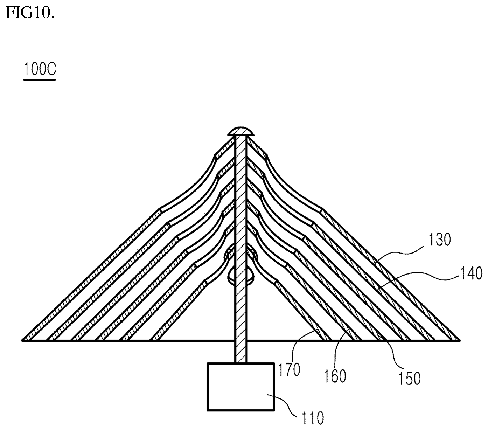

FIGS. 9 and 10 are views showing a propulsion force generator according to a third embodiment of the present invention.

Referring to the drawings, a propulsion force generator 100C according to the third embodiment of the present invention differs from the propulsion force generators 100A and 100B of the above-described embodiments in that a plurality of shells 130, 140, 150, 160, and 170 constituting the propulsion force generator 100C have conic shapes.

In the drawings, although an inlet port is formed in the innermost shell 170, the innermost shell 170 may be changed into a structure in which the inlet port is not formed therein like the propulsion force generator 100B of the second embodiment.

### 4. Fourth embodiment of propulsion force generator

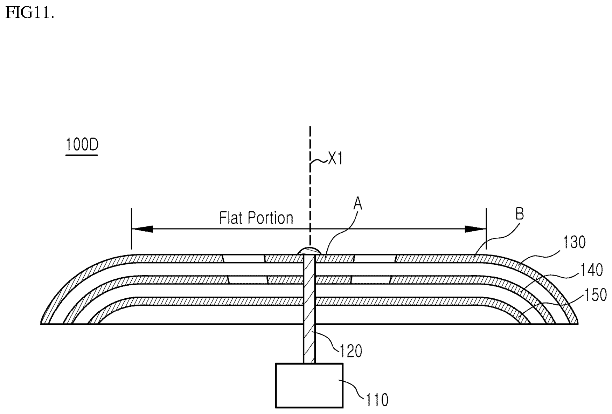

FIG. 11 is a view showing a propulsion force generator according to a fourth embodiment of the present invention.

Referring to the drawing, a propulsion force generator 100D according to the fourth embodiment of the present invention differs from the propulsion force generators of the above-described embodiments in that a plurality of shells 130, 140, and 150 have flat portions relatively widely parallelly extending in disk shapes. The flat portions and bent edges of the shells in FIG. 11 may be formed in disk shapes of which ends are bent.

When a motor 110 rotates, a difference in centrifugal force between an inner portion A close to a central axis X1 and an edge portion B away from the central axis X1 occurs in the shells 130, 140, and 150.

In this case, a fluid around the shells flows by receiving centrifugal forces of the shells due to viscosity and boundary layer effects, and the fluid flows from a central portion of the shells to an outer side of the shells due to the difference in centrifugal force between the inner portion A and the edge portion B.

According to such a principle, as the flat portions of the shells are widened, the difference in centrifugal force between the inner portion A and the edge portion B is greater, the fluid flows more strongly as a result thereof, and thus, a greater propulsion force can be obtained.

### 5. Fifth embodiment of propulsion force generator

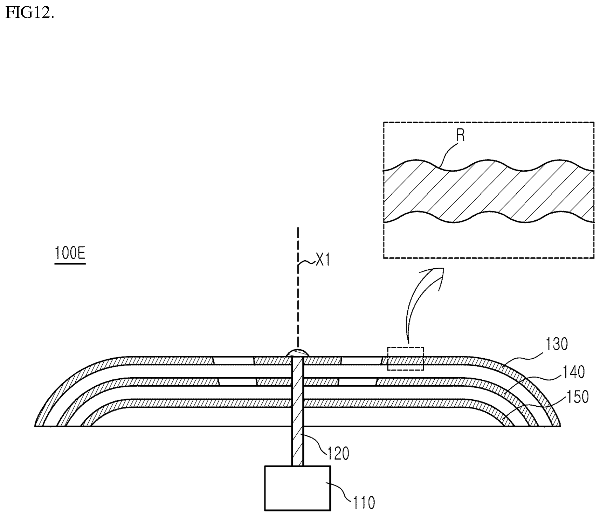

FIG. 12 is a view showing a propulsion force generator according to a fifth embodiment of the present invention.

Referring to the drawing, a propulsion force generator 100E according to the fifth embodiment of the present invention differs from the propulsion force generators of the above-described embodiments in that curves R are formed on surfaces of a plurality of shells 130, 140, and 150. Such curves R are formed to be concentrically arranged around a central axis X1 of the propulsion force generator. In addition, such curves may be formed in directions perpendicular to concentric circles. In addition, curves in concentric directions and curves in the directions perpendicular to the concentric circles may be combined. Such curves may have various sizes, and particularly, may have nanoscale sizes.

As the curves R are formed on the surfaces of the shells, surface areas of the shells are widened, and thus, when the propulsion force generator operates, viscosity and boundary layer effects of a fluid can be improved. In addition, as the curves are arranged in the concentric directions, resistance of the curves against rotary motion of the fluid is minimized, and as the curves are arranged in the directions perpendicular to the concentric circles, resistance of the curves against a centrifugal force of the fluid is minimized.

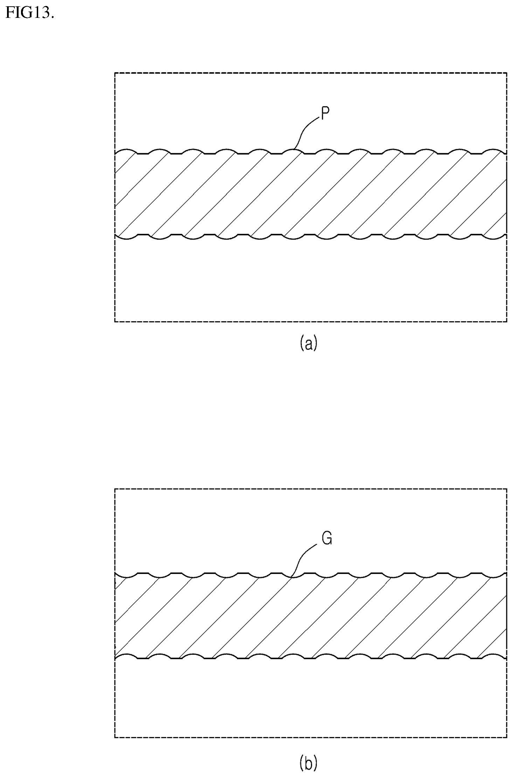

Alternatively, as illustrated in FIG. 13, as a method of widening a surface of a shell, protrusions P or grooves G may also be formed on or in the surface of the shell instead of the curves R.

### 6. Embodiment of drone

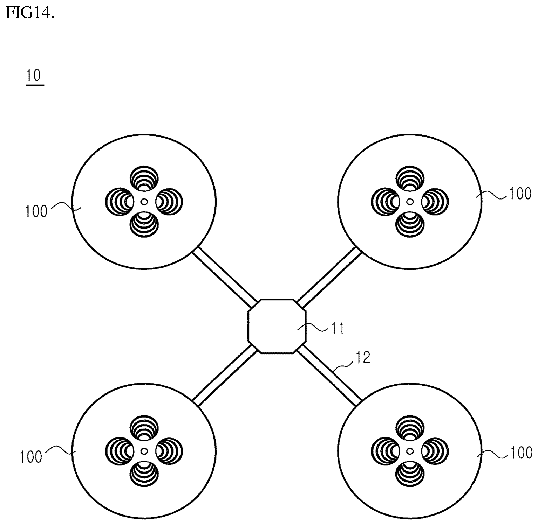

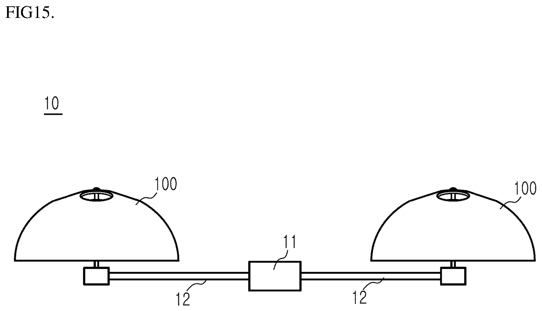

FIGS. 14 and 15 are views showing a drone according to an embodiment of the present invention.

Referring to the drawings, a drone 10 according to the embodiment of the present invention includes a drone body 11 and a plurality of propulsion force generators 100 connected thereto. The drone body 11 and the propulsion force generators 100 may be connected through connecting frames 12.

The plurality of propulsion force generators 100 serve to generate a lift required for traveling of the drone. Each of propulsion force generators 100A, 100B, 100C, 100D, and 100E of the above-described embodiments may be applied to each of the propulsion force generators 100 for the drone 10.

In each of the plurality of propulsion force generators 100, as a motor 110 is driven, air flows to be introduced from above and branched off by and discharged downward along a plurality of shells. Accordingly, an upward lift (propulsion force) required for travelling of the drone is generated.

The drone body 11 is formed to include an electricity supplier which supplies electricity to the plurality of propulsion force generators 100 and a controller which controls operation of the motor.

In the present embodiment, although it is illustrated that four propulsion force generators 100 are mounted in the drone 10, the number of propulsion force generators 100 mounted in the drone 10 may be variously changed to 2, 3, 5, or 6.

## Claims

1. A propulsion force generator comprising:
a motor (110);
a driving shaft (120) driven and rotated by the motor (110); and
a plurality of shells coupled to the driving shaft (120) of which a central axis (X1) is a common rotary axis,
wherein a plurality of inlet ports through which a fluid is introduced according to rotation of the driving shaft are formed in each of the plurality of shells, and
the introduced fluid is branched off by and discharged along the plurality of shells.

2. The propulsion force generator of claim 1, wherein the fluid is branched off and discharged in one common direction.

3. The propulsion force generator of claim 2, wherein the common direction is a direction parallel to the central axis (X1).

4. The propulsion force generator of claim 1, wherein:
the plurality of shells are formed in similar shapes to each other; and
sizes of the plurality of shells gradually decrease toward inner side locations.

5. The propulsion force generator of claim 1, wherein sizes of the inlet ports formed in the plurality of shells gradually decrease toward inner side locations.

6. A propulsion force generator comprising:
a motor (110);
a driving shaft (120) driven and rotated by the motor (110); and
a plurality of shells coupled to the driving shaft (120) of which a central axis (X1) is a common rotary axis,
wherein a plurality of inlet ports through which a fluid is introduced according to rotation of the driving shaft are formed in the remaining shells of the plurality of shells other than an innermost shell, and
the introduced fluid is branched off by and discharged along the plurality of shells.

7. The propulsion force generator of claim 6, wherein the fluid is branched off and discharged in one common direction.

8. The propulsion force generator of claim 7, wherein the common direction is a direction parallel to the central axis (X1).

9. The propulsion force generator of claim 6, wherein:
the plurality of shells are formed in similar shapes to each other; and
sizes of the plurality of shells gradually decrease toward inner side locations.

10. The propulsion force generator of claim 6, wherein sizes of the inlet ports formed in the plurality of shells gradually decrease toward inner side locations.

11. A drone comprising:
a drone body (11); and
a plurality of propulsion force generators connected to the drone body (11),
wherein each of the propulsion force generators includes a motor (110), a driving shaft (120) driven and rotated by the motor (110), and a plurality of shells coupled to the driving shaft (120) of which a central axis (X1) is a common rotary,
a plurality of inlet ports through which a fluid is introduced according to rotation of the driving shaft are formed in each of the plurality of shells, and
the introduced fluid is branched off by and discharged along the plurality of shells.

12. A drone comprising:
a drone body (11); and
a plurality of propulsion force generators connected to the drone body (11),
wherein each of the propulsion force generators includes a motor (110), a driving shaft (120) driven and rotated by the motor (110), and a plurality of shells coupled to the driving shaft (120) of which a central axis (X1) is a common rotary axis,
a plurality of inlet ports through which a fluid is introduced according to rotation of the driving shaft are formed in the remaining shells of the plurality of shells other than an innermost shell, and
the introduced fluid is branched off by and discharged along the plurality of shells.
